Europäisches Patentamt

European Patent Office

Office européen des brevets

(19)

(11) Publication number: 0 147 957
A2

(12) **EUROPEAN PATENT APPLICATION**

(21) Application number: 84308366.8

(22) Date of filing: 03.12.84

(51) Int. Cl.⁴: **B 29 C 47/02**
**F 16 G 1/16**
**//B29K75:00, B29L29:00**

(30) Priority: 23.12.83 GB 8334396

(43) Date of publication of application:
10.07.85 Bulletin 85/28

(84) Designated Contracting States:
AT BE CH DE FR GB IT LI NL SE

(71) Applicant: J.H. FENNER & CO. LIMITED
Marfleet
Hull North Humberside, HU9 5RA(GB)

(72) Inventor: Roberts, Michael John
15 Potterdale Drive Little Weighton
Hull, North Humberside(GB)

(72) Inventor: Harvey, Peter James Nicholas
3 Almond Court Almond Avenue
Swanpool Lincoln(GB)

(74) Representative: Ranson, Arthur Terence et al,
W.P. Thompson & Co. Coopers Building Church Street
Liverpool L1 3AB(GB)

(54) **Thermoplastic power transmission belts.**

(57) A method of manufacturing a thermoplastic transmission belt having a reinforcing element in the form of a tape and an apparatus for performing the method.

In the manufacture of such belting a thermoplastic body is extruded around the reinforcing element.

In order to overcome problems of excessive stretch or insufficient strength, the reinforcing tape (1a) is preheated before the thermoplastic body is extruded therearound. Furthermore, the tape is maintained in tension as it passes through the preheating station (4), the extruding station (5) and the subsequent cooling station (6). A constant tension is ensured by applying a discrete load (2a) to the tape.

Croydon Printing Company Ltd

EP 0 147 957 A2

**0147957**

## DESCRIPTION

"THERMOPLASTIC POWER TRANSMISSION BELTS"

The present invention relates to a method of manufacturing a power transmission belt. In particular to the manufacture of a belt having an elongate body formed from a thermoplastic material and at its core a longitudinal extending tension resistant element.

It is known from British patent specification number 1425462 to provide a constraining element for thermoplastic power transmission belting in the form of a tape woven from a synthetic filamentary yarn such as polyamide or polyester. For this type of belting to perform satisfactorily, it is necessary for a firm bond to exist between the textile tape and the main body of the belting. It has, however, been found that heat shrinkage of the yarns which occurs in the manufacture of the belting, causes the finished product to exhibit a relatively high degree of stretch. As a consequence, when an endless belt formed from such belting is put into operation, relative movement occurs between the tape element and the body element causing the bond between the two to break down resulting in premature failing of the belt.

A solution to the above mentioned problem has been proposed in U,S, patent specification number 4010655 which discloses a constraining tape woven from yarn which is inherently resistant to heat shrinkage and is not bonded to the body element of the belt. Unfortunately, yarn made from heat shrink resistant fibre such as rayon has less tensile strength than polyamide or polyester yarn so that belts reinforced with tape woven from heat shrink resistant yarns, although less susceptible to heat shrinkage, suffer from loss of power transmission capability in comparison with belts reinforced with polyamide or polyester. Moreover, belts reinforced with such heat shrink resistant tape also suffer from dimensional instability in storage due to inherent high moisture absorption.

An aim of the present invention is to provide a method of manufacturing a thermoplastic power transmission belt which overcomes the above mentioned problems of known constructions.

According to the present invention there is provided a method of manufacturing a thermoplastic power transmission belt having a reinforcing element in the form of a tape woven from synthetic filamentary fibre yarn comprising continuously feeding a long length of said reinforcing tape through a heating zone and into a cross head die of an extruder, extruding around said tape a thermoplastic body element of suitable cross-sectional shape, and passing the extrudate through a cooling zone, and maintaining a constant tension in said tape throughout the heating and cooling sequences at least sufficient to resist heat shrinkage.

Preferably the body element is a polyurethane material and the reinforcing tape is a polyester yarn. The method of the present invention enables the problems of heat shrinkage to be avoided when using a polyester yarn.

The tape element may be chemically bonded to the body using a conventional bonding agent such as a polyisocyanate in which case the tape may conventiently be passed through a dip tank containing a polyfunctional organic isocyanate in solution prior to entering the heating zone so that the solvent is driven off in the heating zone.

Preferably the cooling is by water bath.

According to another aspect of the invention there is provided apparatus for performing the method hereinbefore described comprising a let-off spool holding the reinforcing tape, a haul-off mechanism for drawing the tape through the apparatus from the let-off spool, a pre-heating station for the tape, an extruding station and a cooling station and a means for maintaining a constant tension in the tape during its passage through the pre-heating, extruding and cooling stations.

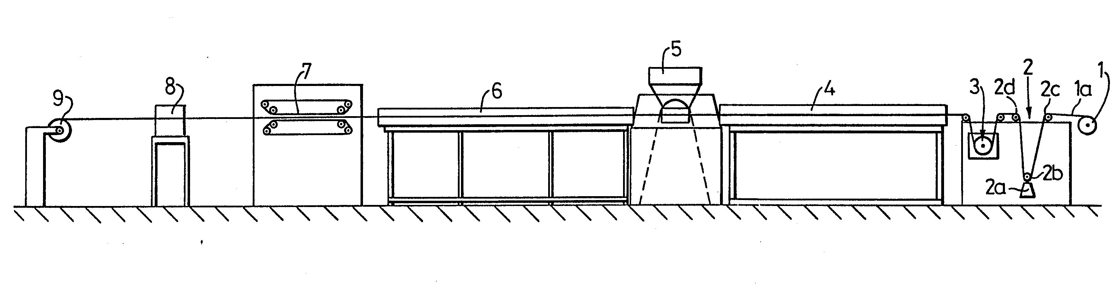

The present invention will now be described further hereinbelow, by way of example only, with reference to the accompanying drawing which is a simplified side view of apparatus for performing the method of the present invention.

Referring to the drawing, the apparatus comprises at one end a holder for a tape let-off spool 1 and at the other end a holder for a coil-up spool 9. A brake mechanism (not illustrated), which may be either a mechanical friction brake or an electro-magnetic particle clutch, is provided for resisting rotation of the let-off spool. The tape extends between the let-off spool and the take-up spool 9. The tape is drawn off the let-off spool 1 by a haul-off mechanism 7. This comprises two opposed endless belts which engage with the sides of the formed belt to grip same such that rotation of the endless belts causes the belt to be hauled through the heating and cooling stations of the apparatus.

In the illustrated embodiment a tape tensioning device 2 is disposed immediately downstream of the let-off spool 1. This ensures that the tape is maintained under a constant tension as it passes through the pre-heating station 4, and the cooling station 6. In the illustrated embodiment the tension is applied by means of a weight 2a which is carried by a roller 2b which engages with the tape 1a. The weight 2a hangs freely under the influence of gravity with the tape passing over rollers 2c 2d.

In the illustrated embodiment the tape is passed through a dip tank 3 before entering the pre-heating station 4. A bonding agent, such as a polyisocyanate, is applied to the tape 1a in the dip tank 3. Immediately downstream of the heating station 4 is a cross head extruder where the thermoplastic material forming the body of the belting is extruded around the tape. The body may be formed in any convenient cross-sectional shape and typically this will be trapezoidal.

The tape with the extruded body formed therearound is then passed through the cooling station 6. Conveniently this comprises a water bath.

A printing machine 8 is optionally provided for labelling the belt and in the illustrated embodiment this is disposed downstream of the haul-off mechanism 7.

In practice, it has been found that a relatively dimensionally stable thermoplastic belting can be produced having, typically, a trapezoidal cross section 13 mm wide by 8 mm deep and having a reinforcing tape 8 mm by 1 mm, when the tape is preheated to a temperature of approximately 200°C whilst maintained under a tension in the range 10 to 20 kilograms.

.........................................................

0147957

## CLAIMS

1. A method of manufacturing a thermoplastic power transmission belt having a reinforcing element (1a) in the form of a tape woven from synthetic filamentary fibre yarn, comprising continuously feeding a long length of said reinforcing tape into a crosshead die of an extruder (5), extruding around said tape a thermoplastic body element of suitable cross-sectional shape, and passing the extrudate through a cooling zone (6), characterised by feeding the tape through a heating zone (4) upstream of the extruder (5) and maintaining a constant tension in said tape throughout the heating and cooling sequences at least sufficient to resist heat shrinkage.

2. A method as claimed in claim 1 further comprising chemically bonding the tape element to the body by applying a bonding agent to the tape.

3. A method as claimed in claim 2 in which the bonding agent is applied by passing the tape through a dip tank (3) disposed upstream of the heating zone (4)

4. A method as claimed in any of claims 1, 2 or 3 in which the reinforcing element is tensioned by a constant amount by suspending a discrete load from it.

5. Apparatus for manufacturing a thermoplastic power transmission belt having a reinforcing element (1a) in the form of a tape woven from synthetic filamentary fibre yarn comprising a let-off spool (1) holding the reinforcing tape, a haul-off mechanism (7) for drawing the tape through the apparatus from the let-off spool, an extruding station (5) to extrude a thermoplastic body element around said tape and a cooling station (6), characterised by a pre-heating station (4) for the tape upstream of the extruder (2) and means for maintaining a constant tension in the tape during its passage through the pre-heating, extruding and cooling stations.

6. Apparatus as claimed in claim 5 in which the constant tension is maintained in the tape by suspending a discrete load (2a) from the tape (1a).

7. Apparatus as claimed in claim 5 or 6 in which rotation of the let-off spool (1) is controlled by a brake or clutch mechanism.

8. Apparatus as claimed in any of claims 5, 6 or 7 in which the haul-off mechanism (7) is disposed downstream of the cooling section and comprises two rotatable opposed endless belts adapted to engage with the sides of the formed belt to grip same.

9. Apparatus as claimed in any of claims 5 to 8 further comprising a dip tank (3) disposed upstream of the heating station (4) at which a bonding agent is applied to the tape.

10. A thermoplastic power transmission belt manufactured according to the method of claims 1 to 5.

11. A thermoplastic power transmission belt as claimed in claim 10 in which the reinforcing tape is formed from a polyester yarn and the body element is a polyurethane material.

. . . . . . . . . . . . . . . . . . . . . . . . . . . . . . . . . . . . . . . . . . . . . . . . . . . . . . . . . .

0147957